# EUROPÄISCHE PATENTSCHRIFT

(11) **EP 3 714 181 B1**
(45) Veröffentlichungstag und Bekanntmachung des Hinweises auf die Patenterteilung: **07.08.2024**
(21) Anmeldenummer: 17816480.2
(22) Anmeldetag: 22.11.2017
(51) Int. Cl.: F16D 55/226, F16D 65/18, F16D 65/56

(54) **SCHEIBENBREMSE EINES FAHRZEUGES MIT EINER ELEKTRISCHEN NACHSTELLEINRICHTUNG**
DISC BRAKE OF A VEHICLE WITH AN ELECTRICAL ADJUSTMENT DEVICE
FREIN À DISQUE D'UN VÉHICULE AVEC UN DISPOSITIF ÉLECTRIQUE DE RATTRAPAGE

(43) Veröffentlichungstag der Anmeldung: 30.09.2020
(73) Patentinhaber: ZF CV Systems Europe BV, 1170 Brussels (BE)
(72) Erfinder: HENNING, Paul, 68723 Schwetzingen (DE); KALMBACH, Marcel, 74360 Ilsfeld (DE); LAMLA, David, 68775 Ketsch (DE)
(74) Vertreter: Copi, Joachim
(86) Internationale Anmeldenummer: PCT/EP2017/080053
(87) Internationale Veröffentlichungsnummer: WO 2019/101303

(56) Entgegenhaltungen:
- DE-A1- 10 139 913
- DE-A1- 10 305 702
- DE-A1- 102012 003 506
- DE-A1- 102013 222 718
- US-A1- 2014 166 412
- US-A1- 2017 219 036

## Beschreibung

Die Erfindung betrifft eine Scheibenbremse eines Fahrzeuges mit einer elektrischen Nachstelleinrichtung, umfassend eine Bremsscheibe und einen Bremssattel zum Nachstellen des Verschleißes von Bremsbelägen. Die elektrische Nachstelleinrichtung umfasst einen Motor, eine Kraftübertragungseinrichtung, eine Sensoreinheit und eine Stelleinheit. Nachstelleinrichtungen für Scheibenbremsen sind hinlänglich bekannt. Nachstelleinrichtungen sind dazu ausgebildet ein Lüftspiel zwischen der Bremsscheibe und mindestens einem Bremsbelag einzustellen. Mit zunehmendem Verschleiß des Bremsbelags, aufgrund von Bremsvorgängen, vergrößert sich das Lüftspiel. Das Lüftspiel wird über die Sensoreinheit sensiert, in einer Steuereinheit ausgewertet und mittels der Stelleinheit automatisch nachgestellt. Die Stelleinheit wird mechanisch oder elektrisch mit einem Motor, der mit der Stelleinheit gekoppelt ist, angetrieben.

Eine elektrische Nachstelleinrichtung ist beispielsweise aus der DE 10 2012 003 506 A1 bekannt. Die Belagverschleißnachstellvorrichtung umfasst eine mechanische Stelleinheit und eine elektrische Nachstelleinrichtung, die gemeinsam an der Zuspannseite der Scheibenbremse angeordnet sind. Die elektrische Nachstelleinrichtung ist über eine Welle mit der Stelleinheit angeordnet. Die elektrische Nachstelleinrichtung und die Stelleinheit sind einzeln oder axial hintereinander in dem Bremssattel integriert.

Eine weitere Variante zur Anordnung einer elektrischen Verschleißnachstellvorrichtung geht aus der DE 10 2015 117 252 A1 hervor. Die Verschleißnachstellvorrichtung Verschleißnachstellvorrichtung ist direkt axial auf einem Gewindestempel einer Spindeleinheit der Nachstellvorrichtung montiert. Die Verschleißnachstellvorrichtung besteht aus einem zweistufigen Planetengetriebe und einem elektrischen Motor. Zwischen dem Planetengetriebe und dem elektrischen Motor befindet sich zum Schutz vor Umwelteinflüssen eine Gehäuseabdeckung. Das Planetengetriebe ist dabei in dem Bremssattel integriert und der elektrische Motor ist außerhalb des Bremssattels auf dem Gehäuse montiert.

Die DE 103 05 702 A1 zeigt eine weitere Scheibenbremse mit einer elektromotorisch angetriebenen Nachstelleinrichtung. Dabei ist die elektronische Steuerung mit dem elektrischen Motor und den elektrischen Anschlussverbindungen zu einer Baueinheit zusammengefasst. Diese Baueinheit ist für einfache Servicearbeiten wiederum modular an einem Gehäusedeckel angeordnet. Der Gehäusedeckel ist über eine umlaufende Dichtung mit dem Bremssattel verbunden. Die Sensoren und die Stelleinheit sind separat in dem Bremssattel verbaut.

Die Erfindung liegt der Aufgabe zugrunde, die Nachteile aus dem Stand der Technik zu überwinden und eine Scheibenbremse mit einer elektrischen Nachstelleinrichtung bereitzustellen, wobei die elektrische Nachstelleinrichtung modular aufgebaut ist und wenig Bauraum in der Scheibenbremse beansprucht. Die Aufgabe wird erfindungsgemäß dadurch gelöst, dass ein elektrischer Motor der elektrischen Nachstelleinheit der Scheibenbremse achsparallel zu einer Stelleinheit, in Richtung einer Bremsscheibe, angeordnet ist oder der elektrische Motor koaxial zur Stelleinheit und der Sensoreinheit angeordnet ist oder der elektrische Motor achsparallel, zu der Stelleinheit und der Sensoreinheit, in Richtung der Bremsscheibe, angeordnet ist und der elektrische Motor und die Stelleinheit auf einer Trägerplatte angeordnet sind.

Es hat sich gezeigt dass die achsparallele Anordnung des elektrischen Motors zu der Stelleinheit wenig Bauraum in dem Bremssattel beansprucht. Für Servicearbeiten sind der elektrische Motor und die Stelleinheit zudem auf einer gemeinsamen Trägerplatte angeordnet, sodass im Servicefall von dem Bremssattel der Scheibenbremse nur die Trägerplatte demontiert werden muss. Wenn hingegen der elektrische Motor der elektrischen Nachstelleinrichtung achsparallel zu der Stelleinheit und der Sensoreinheit, in Richtung der Bremsscheibe, angeordnet ist, dann ist die Sensoreinheit koaxial unterhalb der Stelleinheit und damit platzsparend und bauraumoptimiert angeordnet.

Es ist auch denkbar, dass der elektrische Motor der elektrischen Nachstelleinrichtung koaxial zur Stelleinheit und der Sensoreinheit angeordnet. Nachteilig sind allerdings die zusätzlich benötigte axiale Bauraumlänge und die tangentiale Bauraumlänge der Scheibenbremse. Zudem ist es denkbar, dass der elektrische Motor der elektrischen Nachstelleinrichtung achsparallel zur Stelleinheit und der Sensoreinheit, entgegengesetzt der Richtung der Bremsscheibe, angeordnet ist, also wenn der elektrische Motor außerhalb der Scheibenbremse angeordnet ist, entfällt der Arbeitsschritt zur Ausgestaltung einer Öffnung für den elektrischen Motor in dem Bremssattel. Zum Schutz gegen Umwelteinflüsse kann die Trägerplatte auch ein Gehäuse nach außen aufweisen, sodass eine Abdichtung gegeben ist und der nach außen angeordnete elektrische Motor vor Umwelteinflüssen geschützt ist.

Der elektrische Motor kann aber auch achsparallel, zur Stelleinheit und der Sensoreinheit, entgegengesetzt der Richtung der Bremsscheibe, angeordnet sein.

Zudem ist es besonders vorteilhaft, wenn die ganze elektrische Nachstelleinrichtung als modulare Einheit auf der Trägerplatte angeordnet ist. Damit ist für den Ausbau, zur Kontrolle der Bauteile der elektrischen Nachstelleinrichtung, oder für eine Auswechslung der Bauteile der elektrischen Nachstelleinrichtung, bzw. für den erneuten Einbau der elektrischen Nachstelleinrichtung in den Bremssattel, nur ein Demontageschritt oder Montageschritt erforderlich. Zudem ist vorteilhaft die Nachstellvorrichtung an einer Außenseite der Scheibenbremse, beispielsweise mittels Schrauben, an dem Bremssattel angeordnet.

Erfindungsgemäß weist die elektrische Nachstelleinrichtung zur Spannungsversorgung des elektrischen Motors und der Sensoreinheit, sowie zur Signalübertragung eines Signals der Sensoreinheit, eine Stecker-Verbindung auf. Die Stecker-Verbindung ist die Schnittstelle zu der elektrischen Nachstelleinrichtung. Über die Stecker-Verbindung werden der elektrische Motor und eine Sensoreinheit angesteuert. Die Stecker-Verbindung dient gleichzeitig zur Versorgung des elektrischen Motors der Sensoreinheit mit Strom.

Es hat sich weiterhin als Vorteil erwiesen, dass die Stelleinheit der elektrischen Nachstelleinrichtung eine absolute Position der Stelleinheit detektiert. Die absolute Position dient als Stellgröße für die Regelung des elektrischen Motors. Die Sensoreinheit detektiert in welcher Position sich die Stelleinheit befindet oder anders ausgedrückt wie weit die Stelleinheit in Axialrichtung zu der Bremsscheibe ausgefahren ist. Diese detektierte Position wird als absolute Position bezeichnet. Mit dem Wert der absoluten Position wird das aktuelle Lüftspiel zwischen den Bremsbelägen und der Bremsscheibe über einen Ist-Soll Vergleich abgeleitet. Der Ist-Wert ist der absolute Positionswert, der aus der detektierten Position der Stelleinheit über eine Auswertelogik ermittelt wird. Als Soll-Wert wird ein definiertes Lüftspiel bezeichnet, das zwischen der Bremsscheibe und den Bremsbelägen bestehen soll. Wenn der Ist-Wert mit dem Soll-Wert nicht übereinstimmt, wird die Differenz zwischen dem Ist-Wert und dem Soll-Wert als Stellgröße zur Verstellung des elektrischen Motors, in Richtung der Bremsscheibe oder entgegengesetzt der Bremsscheibe, verwendet.

Darüber hinaus umfasst die Kraftübertragungseinrichtung der elektrischen Nachstelleinrichtung ein Schneckengetriebe mit einer Übertragungswelle. Die Übertragungswelle weist eine mit einem oder mehreren Schraubengängen versehene Schneckenwelle und ein in der Schneckenwelle kämmendes und an der Sensoreinheit angeflanschtes Schneckenrad auf. Die Übertragungswelle kann als Hohlwelle oder als Vollwelle ausgebildet sein. Das Schneckengetriebe weist den Vorteil auf, dass das Schneckengetriebe in seiner Gesamtgröße, entgegen einem Planetengetriebe, kompakt gebaut ist und daher wenig Bauraum in der Scheibenbremse benötigt. Weiterhin umfasst die Kraftübertragungseinrichtung der elektrischen Nachstelleinrichtung ein Kegelgetriebe mit einem, an der Übertragungswelle angeflanschten, ersten Kegelrad und einem, an dem elektrischen Motor angeflanschten, zweiten Kegelrad. Als Vorteil erweist sich ein hoher Wirkungsgrad des ersten Kegelrads und des zweiten Kegelrads. Der hohe Wirkungsgrad ermöglicht eine effiziente Übertragung der Kraft vom Motor zu der Stelleinheit.

Zudem sind die Schneckenwelle und das Schneckenrad vorteilhaft dazu ausgebildet in beiden Drehrichtungen einen Formschluss herzustellen und durch den Formschluss ein selbstständiges Verdrehen der Stelleinheit, bedingt durch Vibrationen oder anderen Umweltwelteinflüssen, zu verhindern. Unter anderen Umwelteinflüssen sind Beschleunigungen jeglicher Art, bedingt durch die Fahrbahn oder vom Fahrzeug, zu verstehen. Darüber hinaus können andere Umwelteinflüsse auch Einflüsse der Bremsscheibe oder der Bremsbeläge sein. Beispielsweise wäre eine Kraft auf die elektrische Nachstelleinrichtung der Scheibenbremse, bedingt durch ausdehnen der Bremsbeläge und der Bremsscheibe bei sehr hohen Temperaturen, ein anderer Umwelteinfluss der Bremsscheibe und der Bremsbeläge.

Die Übertragungswelle ist in einer weiteren Ausgestaltung formschlüssig mit dem elektrischen Motor und der Sensoreinheit arretiert, wobei die Übertragungswelle über das Kegelgetriebe mit dem elektrischen Motor und über das Schneckenrad mit der Sensoreinheit verbunden ist. Bei einem Formschluss greifen Zähne des ersten Kegelrads und des zweiten Kegelrads und Schraubengänge der Schneckenwelle mit Zähnen des Schneckenrads ineinander. Über den Formschluss werden Drehmomente des elektrischen Motors auf die Stelleinheit übertragen.

Der elektrische Motor ist in einer weiteren Ausgestaltung an der Trägerplatte kraftschlüssig oder formschlüssig durch eine Verbindung, umfassend eine Schraubverbindung oder eine Bajonettverbindung fixiert. Bei den Verbindungen handelt es sich um lösbare Verbindungen, die zur Montage oder Demontage schnell gelöst werden können. Somit kann der elektrische Motor als einzelnes Bauteil ausgetauscht werden. Vorzugsweisen ist der elektrische Motor über eine Steckverbindung kraftschlüssig verbunden.

In einer weiteren vorteilhaften Ausgestaltung ist die Trägerplatte axial an einer Außenseite des Bremssattels angeordnet. Die Anordnung an der Außenseite des Bremssattels ermöglicht eine schnelle Montage oder Demontage der Trägerplatte, ohne das die Scheibenbremse demontiert werden muss. Es ist auch kein zusätzlicher Deckel, bzw. keine zusätzliche Öffnung an der Scheibenbremse erforderlich, durch die die Trägerplatte mit der elektrischen Nachstelleinrichtung montiert oder demontiert werden muss. Die Trägerplatte ist vorzugsweise an der Außenseite des Bremssattels, in Radialrichtung unterhalb einer Flanschfläche, zur Montage des Bremszylinders für die Betätigung eines Drehhebels der Scheibenbremse angeordnet.

Die Trägerplatte weist zudem in einer weiteren Ausgestaltung eine umlaufende Dichtung zum Abdichten der elektrischen Nachstelleinrichtung vor Umwelteinflüssen auf. Die umlaufende Dichtung ist axial zwischen dem Bremssattel und der elektrischen Nachstelleinrichtung angeordnet.

Es hat sich zudem als Vorteil erwiesen, dass das Schneckengetriebe, die Übertragungswelle und das Kegelgetriebe zumindest teilweise und damit platzsparend in der Trägerplatte angeordnet sind und der Bremssattel nach dem Einbau der elektrischen Nachstelleinrichtung in die Scheibenbremse als Deckel der elektrischen Nachstelleinrichtung ausgebildet ist. Es ist weiterhin denkbar, dass das Schneckengetriebe, die Übertragungswelle und sowohl das erste Kegelrad als auch das zweite Kegelrad vollständig in der Trägerplatte integriert sind. Durch die vollständige Integration vergrößert sich jedoch die Bauraumtiefe der Trägerplatte in axialer Richtung der Scheibenbremse.

In einer weiteren Ausgestaltung weist die Trägerplatte eine erste Tasche zur Aufnahme des ersten Kegelrads, eine Sicke mit mindestens zwei gegenüberliegenden Vorsprüngen zur Aufnahme der Übertragungswelle und eine zweite Tasche zur Aufnahme des Schneckengetriebes auf. Die erste Tasche der Trägerplatte und die zweite Tasche der Trägerplatte sind so groß dimensioniert, dass genügend Bewegungsfreiheit zwischen dem ersten Kegelrad und dem Schneckenrad vorhanden ist. Zudem sind die mindestens zwei gegenüberliegenden Vorsprünge dazu ausgebildet die Übertragungswelle in der Sicke der Trägerplatte zu fixieren. Die Vorsprünge sind vorzugsweise als Steckverbindung ausgebildet, in der die Übertragungswelle während eines Montagevorgangs eingerastet bzw. eingeklippst wird.

Nachfolgend werden ausgewählte Ausführungsbeispiele der Erfindung anhand der beigefügten Figuren erläutert.

Es zeigt:
Fig. 1 eine Scheibenbremse nach dem aktuellen Stand der Technik mit einer elektrischen Nachstelleinrichtung im eingebauten Zustand,
Fig. 2 eine Scheibenbremse nach dem aktuellen Stand der Technik mit einer Schnittstelle für eine elektrische Nachstelleinrichtung,
Fig. 3 eine elektrische Nachstelleinrichtung in einer ersten gedrehten Seitenansicht,
Fig. 4 eine elektrische Nachstelleinrichtung in einer zweiten gedrehten Seitenansicht,
Fig. 5 eine elektrische Nachstelleinrichtung in einer gedrehten Seitenansicht, wobei der elektrische Motor über eine Steckverbindung mit dem Zwischenstück der Trägerplatte verbunden ist,
Fig. 5a einen elektrischen Motor mit einem Stecker für eine elektrische Nachstelleinrichtung nach Fig. 5,
Fig. 5b eine Detailansicht eines Zwischenstücks der Trägerplatte für eine elektrische Nachstelleinrichtung, wobei das Zwischenstück der Trägerplatte Aussparungen für die Stecker der Steckverbindung aufweist,
Fig. 6 einen elektrischen Motor mit zwei Verschlussteilen für eine Bajonettverbindung,
Fig. 6a Detailansicht eines Zwischenstücks der Trägerplatte für eine elektrische Nachstelleinrichtung, wobei das Zwischenstück der Trägerplatte Schlitze für die Bajonettverbindung aufweist.

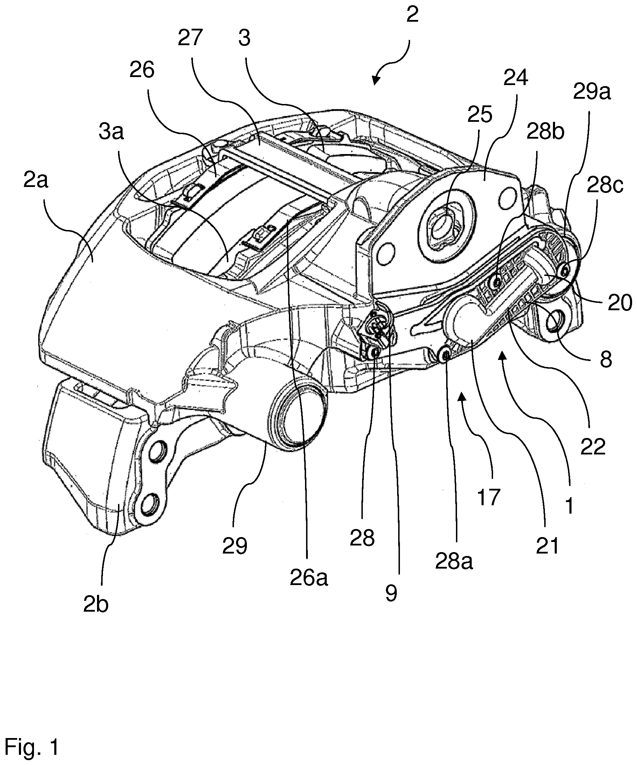

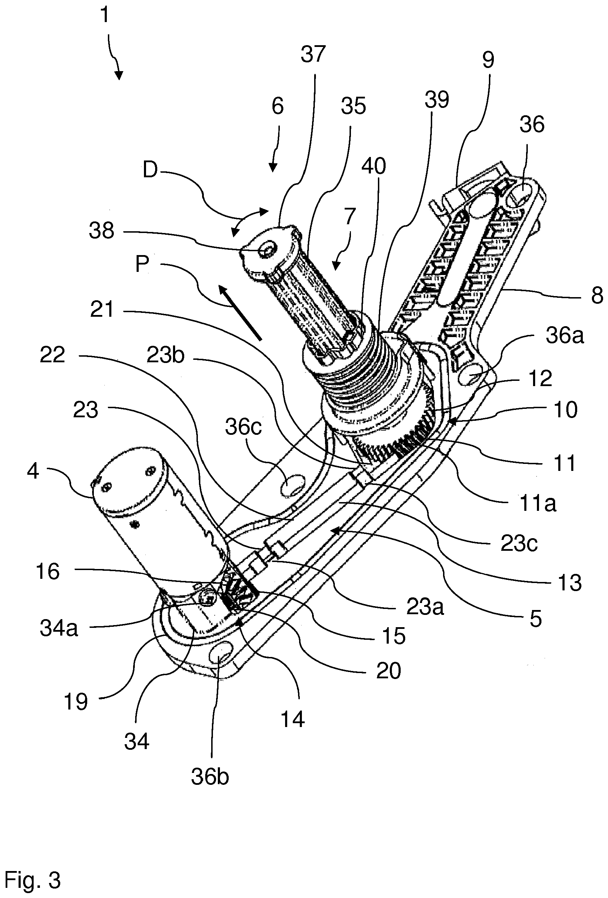

Fig. 1 zeigt eine erfindungsgemäße Scheibenbremse 2 mit einer elektrische Nachstelleinrichtung 1. Die Scheibenbremse 2 weist einen Bremssattel 2a auf der in axialer Richtung mittels zwei Führungsbolzen 29, 29a gleitend auf einem Bremsträger 2b gelagert ist. Darüber hinaus weist die Scheibenbremse 2 zwei Bremsbeläge 3, 3a mit je zwei Niederhaltefedern 26, 26a auf. Ein Belaghaltebügel 27 verhindert ein Herausfallen oder ein herausdrehen der Bremsbeläge 3, 3a in radialer Richtung. Während eines Bremsvorgangs werden die Bremsbeläge 3, 3a unter anderem über einen Drehhebel 25 gegen eine nicht dargestellte Bremsscheibe in axialer Richtung zugespannt. Die elektrische Nachstelleinrichtung 1 weist für die Stromversorgung, an einer Trägerplatte 8 der elektrischen Nachstelleinrichtung 1 eine Stecker-Verbindung 9 auf. Die elektrische Nachstellvorrichtung 1 ist an einer Außenseite 17 der Scheibenbremse 2 an dem Bremssattel 2a mittels vier Schrauben 28, 28a, 28b, 28c befestigt. Zudem ist die elektrische Nachstelleinrichtung 1 radial unterhalb einer Flanschfläche 24, zur Anbindung eines nicht dargestellten Bremszylinders, angeordnet. Deutlich erkennbar sind an der Trägerplatte 8 eine erste Tasche 20, eine zweite Tasche 21 und eine Sicke 22. Die erste Tasche 20 der Trägerplatte 8, die zweite Tasche 21 der Trägerplatte 8 und die Sicke 22 der Trägerplatte 8 dienen der Aufnahme eines Kegelgetriebes 14, eines Schneckengetriebes 10 und einer Übertragungswelle 13, welche in Fig. 3 näher erläutert werden.

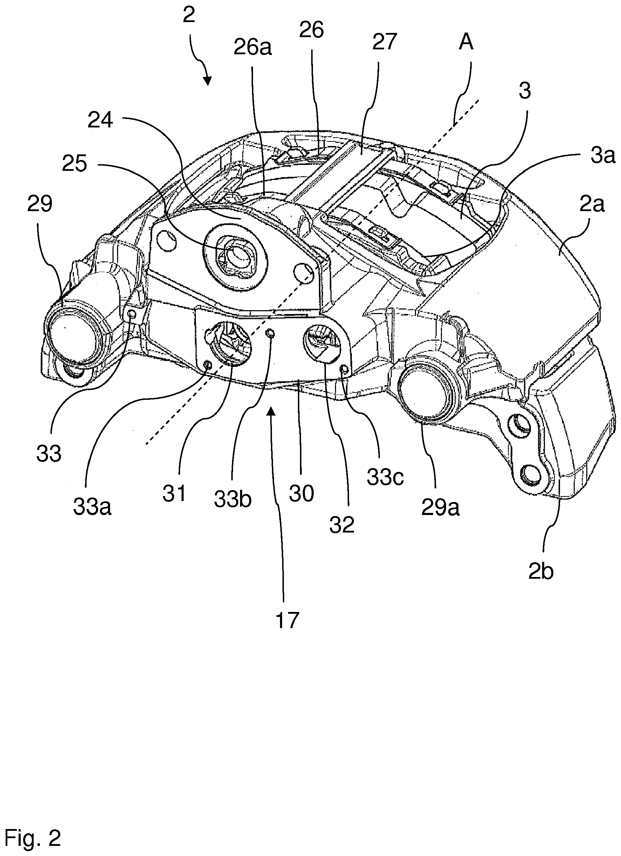

Die Scheibenbremse 2 nach Fig. 1, jedoch ohne elektrische Nachstelleinrichtung 1, zeigt Fig. 2. Die Bezugszeichen und die Bauteile für die Scheibenbremse 2 nach Fig. 2 sind die gleichen wie in Fig. 1, weshalb auf eine erneute Beschreibung der einzelnen Bauteile der Scheibenbremse 2 verzichtet wird. Zusätzlich zu Fig. 1 zeigt Fig. 2 eine axiale Achse A und eine Schnittstelle 30 für die elektrische Nachstelleinrichtung 1. Die Schnittstelle 30 ist für die elektrische Nachstelleinrichtung 1, in Richtung der Außenseite 17 der Scheibenbremse 2, planar gefräst. Weiterhin weist die Schnittstelle 30 für die elektrische Nachstelleinrichtung 1 in axialer Richtung eine erste Öffnung 31 und eine zweite Öffnung 32 auf. Vier Bohrlöcher 33, 33a, 33b, 33c der Schnittstelle 30 sind als Sacklochbohrlöcher ausgebildet und dienen zur Aufnahme der Schrauben 28, 28a, 28b, 28c.

Wie die elektrische Nachstelleinrichtung 1 im Detail aufgebaut ist, zeigt Fig. 3. Die elektrische Nachstelleinrichtung 1 ist modular aufgebaut und weist einen elektrischen Motor 4 auf, der achsparallel zu einer Sensoreinheit 7 auf der Trägerplatte 8 angeordnet ist. Die Sensoreinheit 7 umfasst eine Druckfeder 39, einen Stellkolben 35 einer Stelleinheit 6 und einen Sensor 40. Ein Zwischenstück 34 der Trägerplatte 8 verbindet den elektrischen Motor 4 mit der Trägerplatte 8, wobei eine Schraube 34a des Zwischenstücks 34 der Trägerplatte 8 den elektrischen Motor 4 kraftschlüssig an dem Zwischenstück 34 der Trägerplatte 8 fixiert. Eine Kraftübertragungseinrichtung 5 verbindet den elektrischen Motor 4 mit der Stelleinheit 7. Die Kraftübertragungseinrichtung 5 umfasst ein Kegelgetriebe 14, ein Schneckengetriebe 10 und eine Übertragungswelle 13. Das Kegelgetriebe 14 besteht aus einem ersten Kegelrad 15, das an der Übertragungswelle 13 angeflanscht ist und einem zweiten Kegelrad 16, das an dem elektrischen Motor 4 angeflanscht ist. Das erste Kegelrad 15 und das zweite Kegelrad 16 sind über einen Formschluss miteinander verbunden. Das Schneckengetriebe 10 besteht hingegen aus einem Schneckenrad 12, welches an der Stelleinheit 6 angeflanscht ist und einer, mit mehreren Schraubengängen 11a versehener, Schneckenwelle 11 der Übertragungswelle 13. Die Schneckenwelle 11 kämmt das Schneckenrad 12 und stellt in beiden Drehrichtungen D, d.h. im Uhrzeigersinn und entgegengesetzt dem Uhrzeigersinn, einen Formschluss her. Die Schneckenwelle 11 weist in beiden Drehrichtungen D eine Steigung auf, die selbsthemmend wirken. Damit blockiert die Schneckenwelle 11 das Schneckenrad 12 in beiden Drehrichtungen D und verhindert ein ungewolltes Verstellen der Stelleinheit 6. Die Übertragungswelle 13 ist über das Kegelgetriebe 14 formschlüssig mit dem elektrischen Motor 4 und über das Schneckengetriebe 10 formschlüssig mit der Stelleinheit 6 arretiert. Das Schneckenrad 12 ist in der zweiten Tasche 21 der Trägerplatte 8 angeordnet. In der Sicke 22 der Trägerplatte 8 ist die Übertragungswelle 13 angeordnet, wobei die Übertragungswelle 13 über vier Vorsprünge 23, 23a, 23b, 23c der Sicke 22 kraftschlüssig fixiert wird. Darüber hinaus ist die Sensoreinheit 7 koaxial unterhalb einer Stelleinheit 6 angeordnet. Die Stelleinheit besteht aus einer Mitnehmerscheibe 37 und einer Verbindungswelle 38, wobei die Mitnehmerscheibe 37 an der Verbindungswelle 38 fixiert ist. Die Aufgabe der Sensoreinheit 7 ist es eine absolute Position P der Mitnehmerscheibe 37 zu detektieren. Die detektierte absolute Position P wird dann als Stellgröße für die Regelung des elektrischen Motors 4 genutzt um das Lüftspiel aktiv zwischen der Bremsscheibe und den Bremsbelägen 3, 3a (gezeigt in Fig. 1 und 2) einzustellen. Als aktives Einstellen des Lüftspiels wird die Anpassung des Lüftspiels an die jeweilige Fahrsituation bezeichnet. Während einer Lüftspielnachstellung überträgt der elektrische Motor 4 ein, von der absoluten Position P der Mitnehmerscheibe 37 abhängiges, Drehmoment auf das Kegelgetriebe 14, wobei das Kegelgetriebe 14 das Drehmoment über die Übertragungswelle 13 auf das Schneckengetriebe 10 überträgt. Das Schneckengetriebe 10 überträgt das Drehmoment auf die Stelleinheit 6, wodurch sich die Mitnehmerscheibe 37 dreht. Durch die Drehung der Mitnehmerscheibe 37 gleitet der Sensor 40 axial entlang des Stellkolbens 35 der Stelleinheit 6 in Richtung der absoluten Position P, bzw. in Richtung der Mitnehmerscheibe 37 oder für eine Rückstellung der Bremsbeläge 3, 3a (Fig. 1 und Fig. 2), aufgrund eines Bremsbelagwechsels oder Servicearbeiten, axial entgegengesetzt der Richtung der Mitnehmerscheibe 37. Für die Stromversorgung sind der elektrische Motor 4 und die Sensoreinheit 7 über Stromkabel mit der Stecker-Verbindung 9 verbunden, die radial an der Trägerplatte 8 angeordnet ist. Eine umlaufende Dichtung 19 in der Trägerplatte 8 dichtet die Scheibenbremse 2 nach den Figuren 1 und 2 vor Umwelteinflüssen ab. Der elektrische Motor 4, die Stelleinheit 6 und die Sensoreinheit 7 sind innerhalb der umlaufenden Dichtung 19 der Trägerplatte 8 angeordnet, sodass im eingebauten Zustand der elektrischen Nachstelleinrichtung 1 nach Fig. 1, die umlaufende Dichtung 19 der Trägerplatte 8 auch den elektrischen Motor 4, die Stelleinheit 6 und die Sensoreinheit 7 vor Umwelteinflüssen schützt. Die Trägerplatte 8 ist als eine Art Deckel anzusehen, der die Schnittstelle 30 für die elektrische Nachstelleinrichtung 1 am Bremssattel 2a (Fig. 1) über die umlaufende Dichtung 19 verschließt und abdichtet. Zudem weist die Trägerplatte 8 vier Bohrlöcher 36, 36a, 36b, 36c, zur Befestigung der elektrischen Nachstelleinrichtung 1 an der Schnittstelle 30 für die elektrische Nachstelleinrichtung 1 des Bremssattels 2a, auf.

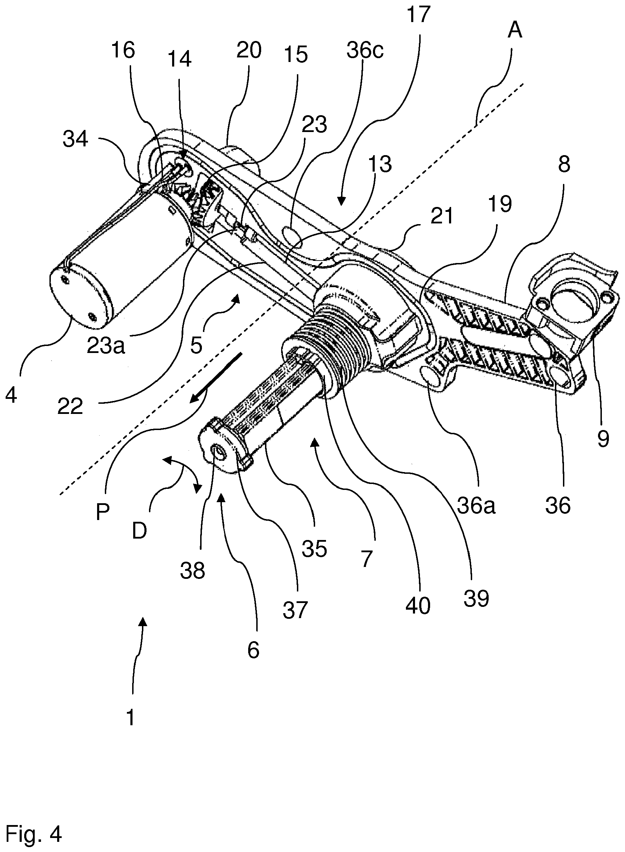

Fig. 4 zeigt die elektrische Nachstelleinrichtung 1 nach Fig. 1 und 3, jedoch ist die Perspektive auf die elektrische Nachstelleinrichtung 1 eine andere. Alle Bauteile mit Bezugszeichen gleichen denen der Fig. 1 und 3, weshalb auf eine erneute Beschreibung der gezeigten Bauteile verzichtet wird. Gegenüber der Fig. 3, weist die Fig. 4 die axiale Achse A auf. Aus der Perspektive nach Fig. 4 ist deutlich erkennbar, dass das erste Kegelrad 15 nur teilweise in der ersten Tasche 20 der Trägerplatte 8 angeordnet ist, damit das erste Kegelrad 15 und das zweite Kegelrad 16 vollständig ineinander greifen und einen Formschluss bilden. Darüber hinaus ist die Ausgestaltung der ersten Tasche 20 der Trägerplatte und der zweiten Tasche 21 der Trägerplatte 8 sichtbar. Die erste Tasche 20 der Trägerplatte 8 ist axial, in Richtung der Außenseite 17 der Scheibenbremse, als halbkreiszylinderförmige Tasche ausgebildet und weist eine größere Bauteillänge auf, als die zweite Tasche 21 der Trägerplatte 8. Die zweite Tasche 21 der Trägerplatte 8 weist axial, in Richtung der Außenseite 17 des Bremssattels 2a, teilweise die Form eines Kreiszylinders auf (Fig. 1).

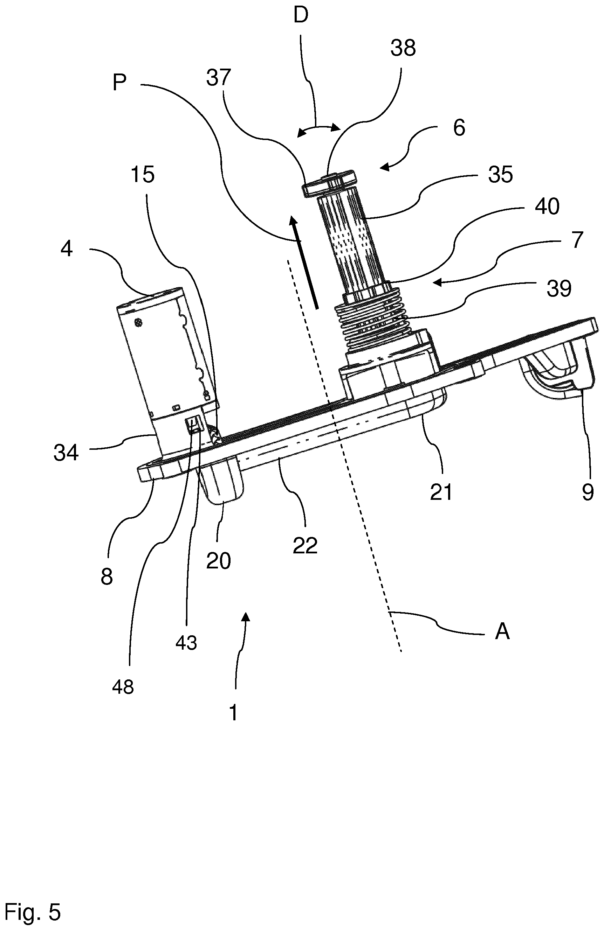

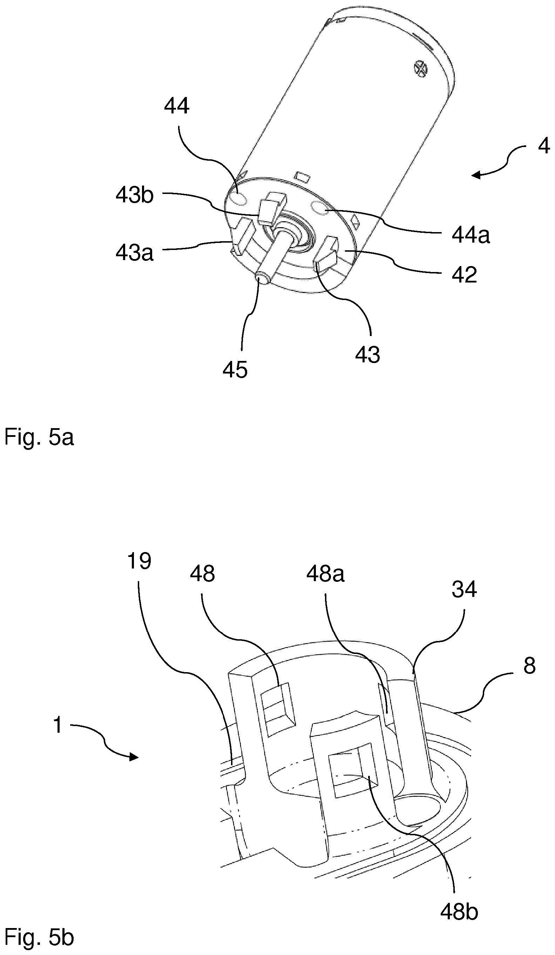

In Fig. 5 ist eine elektrische Nachstelleinrichtung 1 nach Fig. 1, 3, und 4 dargestellt. Allerdings ist die Anbindung des elektrischen Motors 4 über das Zwischenstück 34 mit der Trägerplatte 8 nicht über eine Schraubverbindung 34a, sondern über eine Steckverbindung 43, 48; 43a, 48a; 43b, 48b gelöst. In Fig. 5 ist aufgrund der seitlich gedrehten Darstellung nur der Stecker 43 und die Aussparung 48 sichtbar. Der elektrische Motor 4 wird dabei parallel zur axialen Achse A auf das Zwischenstück 34 der Trägerplatte 8 aufgesteckt.

Fig. 5a zeigt den elektrischen Motor 4 nach Fig. 5 im Detail. Die Stecker 43, 43a, 43b der Steckverbindung 43, 48; 43a, 48a; 43b, 48b sind als Widerhaken ausgebildet und an einer Montagefläche 42 des elektrischen Motors 4 angeordnet. Eine Antriebswelle 45 des elektrischen Motors 4 ist axial an der Montagefläche 42 angeordnet, welche die als Drehbewegung erzeugte Kraft des elektrischen Motors 4 auf die Kraftübertragungseinrichtung 5, (gezeigt in Fig. 3 und Fig. 4) überträgt. Zudem weist der elektrische Motor 4 eine erste Kontaktfläche 44 und einer zweite Kontaktfläche 44a auf. Die erste Kontaktfläche 44 ist als elektrischer Pluspol und die zweite Kontaktfläche 44a ist als elektrischer Minuspol ausgebildet. Die Trägerplatte 8 nach Fig. 5 weist ebenfalls im Bereich des Zwischenstücks 34 der Trägerplatte 8 zwei nicht dargestellte Kontaktflächen auf, wobei eine Kontaktfläche als elektrischer Pluspol ausgebildet ist und eine weitere Kontaktfläche als elektrischer Minuspol ausgebildet ist. Die nicht dargestellten Kontaktflächen der Trägerplatte 8, die erste Kontaktfläche 44 des elektrischen Motors 4 und die zweite Kontaktfläche 44a des elektrischen Motors 4 sind dazu ausgebildet, den elektrischen Motor 4 mit einer elektrischen Spannung zu versorgen. Dazu ist bei einer Anordnung des elektrischen Motors 4 nach Fig. 5 die erste Kontaktfläche 44 mit der nicht dargestellten positiv gepolten Kontaktfläche der Trägerplatte 8 in Kontakt. Zudem ist die zweite Kontaktfläche 44a mit der nicht dargestellten negativ gepolten Kontaktfläche der Trägerplatte 8 in Kontakt.

Eine Detailansicht des Zwischenstücks 34 der Trägerplatte 8 nach Fig. 5 zeigt Fig. 5b. Dabei sind sehr deutlich die Aussparungen 48, 48a, 48b erkennbar. In die Aussparungen 48, 48a, 48b werden die Stecker 43, 43a, 43b der Steckverbindung 43, 48; 43a, 48a; 43b, 48b gesteckt und verbinden den elektrischen Motor 4 kraftschlüssig mit dem Zwischenstück 34 der Trägerplatte 8.

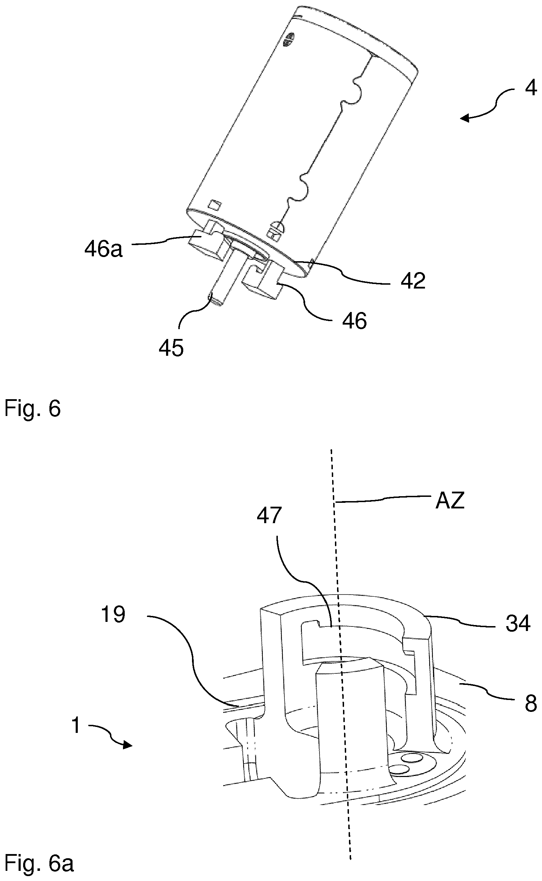

Fig. 6 zeigt eine weitere Ausgestaltung des elektrischen Motors 4 zur Verbindung des elektrischen Motors 4 mit dem Zwischenstück 34 der Trägerplatte 8 einer elektrischen Nachstelleinrichtung 1 nach Fig. 1, 3, 4, 5. Der elektrische Motor 4 weist in diesem Ausführungsbeispiel an der Montagefläche 42 zwei Verschlussteile 46, 46a und eine Antriebswelle 45 des elektrischen Motors 4 auf. Die Verschlussteile 46, 46a sind Teil einer Bajonettverbindung (46, 47; 46a), wobei der Längsschlitz 47 des Zwischenstücks 34 der Trägerplatte 8 in Fig. 6a näher erläutert ist.

In Fig. 6a ist die Ausgestaltung des Zwischenstücks 34 der Trägerplatte 8 zur Herstellung einer Bajonettverbindung (46, 47; 46a) gezeigt. Zum besseren Verständnis wird zusätzlich auf die Fig. 6 verwiesen. Das Zwischenstück 34 der Trägerplatte 8 weist einen Längsschlitz 47 auf, an dessen Enden sich rechtwinklig ein kurzer Querschlitz ansetzt. Weiterhin ist eine axiale Achse AZ des Zwischenstücks 34 der Trägerplatte 8 gezeigt. Der elektrische Motor 4 nach Fig. 6 wird axial in das Zwischenstück 34 der Trägerplatte 8 eingesetzt und mittels einer Drehbewegung gegeneinander gepresst. Die Bajonettverbindung (46, 47; 46a) wirkt wie ein Gewinde.

Das Verschlussteil 46 wird in den Längsschlitz 47 des Zwischenstücks 34 der Trägerplatte 8 eingesetzt. Das Verschlussteil 46a wird in einen weiteren nicht dargestellten Längsschlitz des Zwischenstücks 34 der Trägerplatte 8 eingesetzt. Der nicht dargestellte Längsschlitz des Zwischenstücks 34 der Trägerplatte 8 ist axial an der gegenüberliegenden Seite des Längsschlitz 47 des Zwischenstücks 34 der Trägerplatte 8 angeordnet.

### Bezugszeichenliste als Teil der Beschreibung

- 1: elektrische Nachstelleinrichtung
- 2: Scheibenbremse
- 2a: Bremssattel
- 2b: Bremsträger
- 3, 3a: Bremsbelag
- 4: elektrischer Motor
- 5: Kraftübertragungseinrichtung
- 6: Stelleinheit
- 7: Sensoreinheit
- 8: Trägerplatte
- 9: Stecker-Verbindung
- 10: Schneckengetriebe
- 11: Schneckenwelle
- 11a: Schraubengänge der Schneckenwelle 11
- 12: Schneckenrad
- 13: Übertragungswelle
- 14: Kegelgetriebe
- 15: erstes Kegelrad
- 16: zweites Kegelrad
- 17: Außenseite der Scheibenbremse 2
- 19: umlaufende Dichtung der Trägerplatte (8)
- 20: erste Tasche der Trägerplatte (8)
- 21: zweite Tasche der Trägerplatte (8)
- 22: Sicke der Trägerplatte (8)
- 23, 23a, 23b, 23c: Vorsprung der Sicke 22
- 24: Flanschfläche zur Anbindung eines Bremszylinders
- 25: Drehhebel
- 26, 26a: Niederhaltefeder
- 27: Belaghaltebügel
- 28, 28a, 28b, 28c: Schrauben
- 29, 29a: Führungsbolzen
- 30: Schnittstelle für die elektrische Nachstelleinrichtung 1
- 31: erste Öffnung der Schnittstelle 30
- 32: zweite Öffnung der Schnittstelle 30
- 33, 33a, 33b, 33c: Bohrlöcher der Schnittstelle 30
- 34: Zwischenstück der Trägerplatte 8
- 34a: Schraube des Zwischenstücks 34
- 35: Stellkolben der Stelleinheit 6
- 36, 36a, 36b, 36c: Bohrlöcher der Trägerplatte 8
- 37: Mitnehmerscheibe
- 38: Verbindungswelle
- 39: Druckfeder
- 40: Sensor
- 42: Montagefläche des elektrischen Motors 4
- 43, 43a, 43b: Stecker der Steckverbindung 43, 48; 43a, 48a; 43b, 48b
- 44: erste Kontaktfläche
- 44a: zweite Kontaktfläche
- 45: Antriebswelle des elektrischen Motors 4
- 46, 46a: Verschlussteil
- 47: Längsschlitz des Zwischenstücks 34 der Trägerplatte 8
- 48, 48a, 48b: Aussparung der Steckverbindung 43, 48; 43a, 48a; 43b, 48b
- P: absolute Position
- D: Drehrichtung
- A: axiale Achse
- AZ: axiale Achse des Zwischenstücks 34

## Patentansprüche

1. Scheibenbremse (2) eines Fahrzeugs umfassend eine elektrische Nachstelleinrichtung (1) eine Bremsscheibe und einen Bremssattel (2a) zum Nachstellen des Verschleißes von Bremsbelägen (3, 3a), wobei der Bremssattel (2a) eine Schnittstelle (30) für die elektrische Nachstelleinrichtung (1) in axialer Richtung eine erste Öffnung (31) und eine zweite Öffnung (32) aufweist, wobei die elektrische Nachstelleinrichtung (1) einen elektrischen Motor (4), eine Kraftübertragungseinrichtung (5), eine Sensoreinheit (7) zum Sensieren eines Lüftspiels, eine Steuereinheit zum Auswerten des sensierten Lüftspiels und eine Stelleinheit (6) zum Nachstellen des über die Steuereinheit ausgewerteten Lüftspiels umfasst und die elektrische Nachstelleinrichtung (1) radial unterhalb einer Flanschfläche (24) des Bremssattels (2a) zum Anflanschen eines Bremszylinders angeordnet ist, wobei der elektrische Motor (4) achsparallel zu der Stelleinheit (6), in Richtung der Bremsscheibe, angeordnet ist oder der elektrische Motor (4) achsparallel, zu der Stelleinheit (6) und der Sensoreinheit (7), in Richtung der Bremsscheibe, angeordnet ist oder der elektrische Motor (4) koaxial zur Stelleinheit (6) und der Sensoreinheit (7) angeordnet ist und der elektrische Motor (4) und die Stelleinheit (6) auf einer Trägerplatte (8) angeordnet sind, wobei die elektrische Nachstelleinrichtung (1) zur Spannungsversorgung des elektrischen Motors (4) und der Sensoreinheit (7), sowie zur Signalübertragung eines Signals der Sensoreinheit (7), eine Stecker-Verbindung (9) aufweist wobei die Sensoreinheit (7) der elektrischen Nachstelleinrichtung (1) eine absolute Position (P) der Stelleinheit (6) detektiert und die absolute Position (P) mittels einer Auswertelogik direkt als Stellgröße für die Regelung des elektrischen Motors (4) ausgebildet ist.

2. Scheibenbremse (2) nach einem der vorangegangenen Ansprüche, **dadurch gekennzeichnet, dass** die Kraftübertragungseinrichtung (5) der elektrische Nachstelleinrichtung (1) folgende Merkmale umfasst:
a. ein Schneckengetriebe (10) mit einer Übertragungswelle (13), wobei die Übertragungswelle (13) eine, mit einem oder mehreren Schraubengängen (11a) versehene, Schneckenwelle (11) aufweist und einem, in der Schneckenwelle (11) kämmenden und an der Stelleinheit (6) angeflanschten, Schneckenrad (12), und
b. ein Kegelgetriebe (14), umfassend ein an der Übertragungswelle (13) angeflanschtes erstes Kegelrad (15) und ein an dem elektrischen Motor (4) angeflanschtes zweites Kegelrad (16).

3. Scheibenbremse (2) nach Anspruch 2, **dadurch gekennzeichnet, dass** die Schneckenwelle (11) und das Schneckenrad (12) dazu ausgebildet sind, in beiden Drehrichtungen (D) einen Formschluss herzustellen und durch den Formschluss ein selbstständiges Verdrehen der Stelleinheit (6), bedingt durch Vibrationen oder anderen Umweltwelteinflüssen zu verhindern.

4. Scheibenbremse (2) nach Anspruch 2 oder 3, **dadurch gekennzeichnet, dass** die Übertragungswelle (13) formschlüssig mit dem elektrischen Motor (4) und der Sensoreinheit (7) arretiert ist, wobei die Übertragungswelle (13) über das Kegelgetriebe (14) mit dem elektrischen Motor (4) und über das Schneckenrad (12) mit der Sensoreinheit (7) verbunden ist.

5. Scheibenbremse (2) nach einem der vorangegangenen Ansprüche, **dadurch gekennzeichnet, dass** der elektrische Motor (4) an der Trägerplatte (8) kraftschlüssig oder formschlüssig durch eine Verbindung, umfassend eine Schraubverbindung (34, 34a), eine Steckverbindung (43, 48; 43a, 48a; 43b, 48b) oder eine Bajonettverbindung (46, 47; 46a), fixiert ist.

6. Scheibenbremse (2) nach einem der vorangegangenen Ansprüche, **dadurch gekennzeichnet, dass** die Trägerplatte (8) axial an der Außenseite (17) des Bremssattels (2a) angeordnet ist.

7. Scheibenbremse (2) nach einem der vorangegangenen Ansprüche, **dadurch gekennzeichnet, dass** die Trägerplatte (8) eine umlaufende Dichtung (19) zum Abdichten der elektrischen Nachstelleinrichtung (1) vor Umwelteinflüssen aufweist und die umlaufende Dichtung (19) axial zwischen dem Bremssattel (2a) und der Nachstelleinrichtung (1) angeordnet ist.

8. Scheibenbremse (2) nach Anspruch 2 und einem der vorangegangenen Ansprüche, **dadurch gekennzeichnet, dass** das Schneckengetriebe (10), die Übertragungswelle (13) und das Kegelgetriebe (14) zumindest teilweise in der Trägerplatte (8) angeordnet sind und der Bremssattel (2a), nach Einbau der elektrischen Nachstelleinrichtung (1) in die Scheibenbremse (2), als Deckel der elektrischen Nachstelleinrichtung (1) ausgebildet ist.

9. Scheibenbremse (2) nach Anspruch 2 und einem der vorangegangenen Ansprüche, **dadurch gekennzeichnet, dass** die Trägerplatte (8):
a. eine erste Tasche (20) zur Aufnahme des ersten Kegelrads (15),
b. eine Sicke (22) mit mindestens zwei gegenüberliegenden Vorsprüngen (23, 23a; 23b, 23c) zur Aufnahme der Übertragungswelle (13), und
c. eine zweite Tasche (21) zur Aufnahme des Schneckengetriebes (10) aufweist.

10. Scheibenbremse (2) nach Anspruch 9, **dadurch gekennzeichnet, dass** die mindestens zwei gegenüberliegenden Vorsprünge (23, 23a; 23b, 23c) dazu ausgebildet sind, die Übertragungswelle (13) in der Sicke (22) der Trägerplatte (8) zu fixieren.

## Claims

1. Disk brake (2) of a vehicle comprising an electric adjusting device (1), a brake disk and a brake caliper (2a) for adjusting the wear of brake pads (3, 3a), wherein the brake caliper (2a) has an interface (30) for the electric adjusting device (1), in the axial direction a first opening (31) and a second opening (32), wherein the electric adjusting device (1) comprises an electric motor (4), a force transmission device (5), a sensor unit (7) for sensing an air gap, a control unit for evaluating the sensed air gap and an adjusting unit (6) for adjusting the air gap evaluated by the control unit, and the electric adjusting device (1) is arranged radially below a flange surface (24) of the brake caliper (2a) for flanging a brake cylinder, wherein the electric motor (4) is arranged axially in parallel with the adjusting unit (6), in the direction of the brake disk, or the electric motor (4) is arranged axially in parallel with the adjusting unit (6) and the sensor unit (7), in the direction of the brake disk, or the electric motor (4) is arranged coaxially to the adjusting unit (6) and the sensor unit (7), and the electric motor (4) and the adjusting unit (6) are arranged on a carrier plate (8), wherein the electric adjusting device (1) has a plug connection (9) for supplying voltage to the electric motor (4) and the sensor unit (7) and for transmitting a signal from the sensor unit (7), wherein the sensor unit (7) of the electric adjusting device (1) detects an absolute position (P) of the adjusting unit (6) and the absolute position (P) is designed directly as a manipulated variable for controlling the electric motor (4) by means of an evaluation logic system.

2. Disk brake (2) according to any of the preceding claims,
**characterized in that** the force transmission device (5) of the electric adjusting device (1) comprises the following features:
a. a worm gear (10) having a transmission shaft (13), the transmission shaft (13) having a worm shaft (11) provided with one or more helical gears (11a) and a worm wheel (12) meshing in the worm shaft (11) and flange-mounted on the adjusting unit (6), and
b. a bevel gear (14) comprising a first bevel wheel (15) flanged to the transmission shaft (13) and a second bevel wheel (16) flanged to the electric motor (4).

3. Disk brake (2) according to claim 2, **characterized in that** the worm shaft (11) and the worm wheel (12) are designed to produce a form fit in both directions of rotation (D) and, by means of the form fit, to prevent the adjusting unit (6) from rotating independently due to vibrations or other environmental influences.

4. Disk brake (2) according to either claim 2 or claim 3,
**characterized in that** the transmission shaft (13) is locked to the electric motor (4) and the sensor unit (7) in a form-fitting manner, the transmission shaft (13) being connected to the electric motor (4) via the bevel gear (14) and to the sensor unit (7) via the worm gear (12).

5. Disk brake (2) according to any of the preceding claims,
**characterized in that** the electric motor (4) is fixed to the carrier plate (8) in a force-fitting or form-fitting manner by a connection comprising a screw connection (34, 34a), a plug connection (43, 48; 43a, 48a; 43b, 48b) or a bayonet connection (46, 47; 46a).

6. Disk brake (2) according to any of the preceding claims,
**characterized in that** the carrier plate (8) is arranged axially on the outer side (17) of the brake caliper (2a).

7. Disk brake (2) according to any of the preceding claims,
**characterized in that** the carrier plate (8) has a circumferential seal (19) for sealing the electric adjusting device (1) against environmental influences and the circumferential seal (19) is arranged axially between the brake caliper (2a) and the adjusting device (1).

8. Disk brake (2) according to claim 2 and any of the preceding claims, **characterized in that** the worm gear (10), the transmission shaft (13) and the bevel gear (14) are arranged at least partially in the carrier plate (8) and the brake caliper (2a), after installation of the electric adjusting device (1) in the disk brake (2), is designed as a cover of the electric adjusting device (1).

9. Disk brake (2) according to claim 2 and any of the preceding claims,
**characterized in that** the carrier plate (8) has:
a. a first pocket (20) for receiving the first bevel wheel (15),
b. a bead (22) having at least two opposing projections (23, 23a; 23b, 23c) for receiving the transmission shaft (13), and
c. a second pocket (21) for receiving the worm gear (10).

10. Disk brake (2) according to claim 9, **characterized in that** the at least two opposing projections (23, 23a; 23b, 23c) are designed to fix the transmission shaft (13) in the bead (22) of the carrier plate (8).

## Revendications

1. Frein à disque (2) d'un véhicule comprenant un dispositif de rattrapage de jeu électrique (1), un disque de frein et un étrier de frein (2a) pour le rattrapage de jeu dû à l'usure de garnitures de frein (3, 3a), dans lequel l'étrier de frein (2a) présente une interface (30) pour le dispositif de rattrapage de jeu électrique (1) dans le sens axial, une première ouverture (31) et une deuxième ouverture (32), dans lequel le dispositif de rattrapage de jeu électrique (1) comprend un moteur électrique (4), un dispositif de transmission de force (5), une unité de détection (7) pour la détection d'un jeu d'air, une unité de commande pour évaluation du jeu d'air détecté et une unité de réglage (6) pour le rattrapage du jeu d'air évalué par l'intermédiaire de l'unité de commande, et le dispositif de rattrapage de jeu électrique (1) est disposé radialement au-dessous d'une surface de bride (24) de l'étrier de frein (2a) pour le bridage d'un cylindre de frein, dans lequel le moteur électrique (4) est disposé parallèlement à l'axe de l'unité de réglage (6), en direction du disque de frein, ou le moteur électrique (4) est disposé parallèlement à l'axe de l'unité de réglage (6) et de l'unité de détection (7), en direction du disque de frein, ou le moteur électrique (4) est disposé coaxialement à l'unité de réglage (6) et à l'unité de détection (7), et le moteur électrique (4) et l'unité de réglage (6) sont disposés sur une plaque de support (8), dans lequel le dispositif de rattrapage de jeu électrique (1) présente une liaison à fiche (9) pour l'alimentation en tension du moteur électrique (4) et de l'unité de détection (7), ainsi que pour la transmission de signal d'un signal de l'unité de détection (7), dans lequel l'unité de détection (7) du dispositif de rattrapage de jeu électrique (1) détecte une position absolue (P) de l'unité de réglage (6) et la position absolue (P) est conçue directement comme grandeur de réglage pour la régulation du moteur électrique (4) à l'aide d'une logique d'évaluation.

2. Frein à disque (2) selon l'une des revendications précédentes,
**caractérisé en ce que** le dispositif de transmission de force (5) du dispositif de rattrapage de jeu électrique (1) comprend les caractéristiques suivantes :
a. un engrenage à vis sans fin (10) comportant un arbre de transmission (13), dans lequel l'arbre de transmission (13) présente un arbre à vis sans fin (11) pourvu d'un ou de plusieurs pas de vis (11a) et une roue à vis sans fin (12) engrenant dans l'arbre à vis sans fin (11) et bridée sur l'unité de réglage (6), et
b. un engrenage conique (14), comprenant une première roue conique (15) bridée sur l'arbre de transmission (13) et une seconde roue conique (16) bridée sur le moteur électrique (4).

3. Frein à disque (2) selon la revendication 2, **caractérisé en ce que** l'arbre à vis sans fin (11) et la roue à vis sans fin (12) sont conçus pour réaliser une liaison par complémentarité de forme dans les deux sens de rotation (D) et pour empêcher, grâce à la liaison par complémentarité de forme, une rotation autonome de l'unité de réglage (6), due à des vibrations ou à d'autres influences environnementales.

4. Frein à disque (2) selon la revendication 2 ou 3, **caractérisé en ce que** l'arbre de transmission (13) est bloqué par complémentarité de forme avec le moteur électrique (4) et l'unité de détection (7), dans lequel l'arbre de transmission (13) est relié au moteur électrique (4) par l'intermédiaire de l'engrenage conique (14) et à l'unité de détection (7) par l'intermédiaire de la roue à vis sans fin (12).

5. Frein à disque (2) selon l'une des revendications précédentes, **caractérisé en ce que** le moteur électrique (4) est fixé à la plaque de support (8) par adhérence ou par complémentarité de forme au moyen d'une liaison comprenant une liaison vissée (34, 34a), une liaison enfichable (43, 48 ; 43a, 48a ; 43b, 48b) ou une liaison à baïonnette (46, 47 ; 46a).

6. Frein à disque (2) selon l'une des revendications précédentes, **caractérisé en ce que** la plaque de support (8) est disposée axialement sur le côté extérieur (17) de l'étrier de frein (2a).

7. Frein à disque (2) selon l'une des revendications précédentes, **caractérisé en ce que** la plaque de support (8) présente un joint périphérique (19) pour l'étanchéification du dispositif de rattrapage de jeu électrique (1) vis-à-vis de l'environnement, et le joint périphérique (19) est disposé axialement entre l'étrier de frein (2a) et le dispositif de rattrapage de jeu (1).

8. Frein à disque (2) selon la revendication 2 et l'une des revendications précédentes, **caractérisé en ce que** l'engrenage à vis sans fin (10), l'arbre de transmission (13) et l'engrenage conique (14) sont disposés au moins partiellement dans la plaque de support (8) et l'étrier de frein (2a), après montage du dispositif de rattrapage de jeu électrique (1) dans le frein à disque (2), est conçu sous forme de couvercle du dispositif de rattrapage de jeu électrique (1).

9. Frein à disque (2) selon la revendication 2 et l'une des revendications précédentes, **caractérisé en ce que** la plaque de support (8) présente :
a. une première poche (20) destinée à recevoir la première roue conique (15),
b. une moulure (22) comportant au moins deux saillies opposées (23, 23a ; 23b, 23c) destinée à recevoir l'arbre de transmission (13), et
c. une seconde poche (21) destinée à recevoir l'engrenage à vis sans fin (10).

10. Frein à disque (2) selon la revendication 9, **caractérisé en ce que** les au moins deux saillies opposées (23, 23a ; 23b, 23c) sont conçues pour fixer l'arbre de transmission (13) dans la moulure (22) de la plaque de support (8).
